# EUROPÄISCHE PATENTSCHRIFT

(11) **EP 1 558 859 B1**
(45) Veröffentlichungstag und Bekanntmachung des Hinweises auf die Patenterteilung: **19.03.2008**
(21) Anmeldenummer: 03810440.2
(22) Anmeldetag: 05.11.2003
(51) Int. Cl.: F16H 7/12

(54) **FEDER- UND DÄMPFUNGSVORRICHTUNG**
SPRINGING AND DAMPENING DEVICE
DISPOSITIF DE SUSPENSION ET D'AMORTISSEMENT

(30) Priorität: 07.11.2002 DE 10251859
(43) Veröffentlichungstag der Anmeldung: 03.08.2005
(73) Patentinhaber: Schaeffler KG, 91074 Herzogenaurach (DE); ContiTech Antriebssysteme GmbH, 30165 Hannover (DE)
(72) Erfinder: SAUERMANN, Diethard, 91088 Bubenreuth (DE); KRAFT, Thomas, 90616 Neuhof/Zenn (DE); BAICU, Calin, 4000 Sfantu Gheorghe, R-Covasna (RO); MOSES, Reinhold, 37632 Eimen (DE)
(74) Vertreter: Maiwald Patentanwalts GmbH
(86) Internationale Anmeldenummer: PCT/EP2003/012347
(87) Internationale Veröffentlichungsnummer: WO 2004/042253

(56) Entgegenhaltungen:
- DE-A- 2 608 277
- DE-A- 3 912 944
- US-A- 1 667 117

## Beschreibung

### TECHNISCHES GEBIET

Die vorliegende Erfindung betrifft eine Feder- und Dämpfungsvorrichtung zum Federn Dämpfen der Dreh- bzw. Schwenkbewegung von zumindest einem dreh- bzw. schwenkbar und federnd gelagerten Hebelarm. Insbesondere betrifft die Erfindung eine Feder- und Dämpfungsvorrichtung, die in einer Spannvorrichtung für ein Zugmittel wie beispielsweise ein Riemen oder Kette integriert ist.

### HINTERGRUND DER ERFINDUNG

Eine Feder- und Dämpfungsvorrichtung der zuvor genannten Art kann in verschiedensten Anordnungen oder Systemen verwendet werden, in denen eine Drehbewegung zum einen gefedert, zum anderen gedämpft werden soll. Beispielsweise ist eine solche Feder- und Dämpfungsvorrichtung in einer Spannvorrichtung für ein Zugmittel eines Zugmitteltriebs verwendbar, in der die Schwenkbewegung von zumindest einem Spannarm mit Spannmittel, beispielsweise eine Spannrolle, zum Spannen eines Trums des Zugmittels abgefedert und auch gedämpft werden muss.

Ein besonderes Anwendungsgebiet ist dort zu sehen, wo es in einem Zugmittel- oder Riementrieb zu einem Wechsel zwischen Zugtrum und Leertrum kommt. Ein solcher Trumwechsel erfolgt beispielsweise in einem Riementrieb, der einen Startergenerator und eine Kurbelwelle eines Motors umfasst. Ein solcher Riementrieb wird in einem Startbetrieb und einem Generatorbetrieb betrieben. Je nach Betriebsmodus ist ein Trum ein Zug- oder Leertrum. Somit muss die Spannung des Riemens je nach Betriebsmodus an unterschiedlichen Trums eingestellt werden. Es ist nebenbei anzumerken, dass ein Trum denjenigen Teil des Zugmittels bezeichnet, der zwischen zwei einander benachbarten Umlenkrollen liegt. Die Umlenkrollen, insbesondere Riemenscheiben, können, müssen aber nicht mit Aggregaten zu deren Antrieb verbunden sein.

Bei Verbrennungsmotoren werden Drehbewegungen der Kurbelwelle auf den Riementrieb übertragen. Wie allgemein bekannt, sind die Kurbelwellenumdrehungen allerdings Ungleichförmigkeiten unterworfen, die bei hohen Leistungen und niedrigen Kurbelwellendrehzahlen unter Umständen besonders auffällig sind. Die Folge dieser Drehungleichförmigkeiten sind Wechseldrehmomente, die auf den Riementrieb übertragen werden und dort Beschleunigungen bzw. Verzögerungen im Zugmittel hervorrufen. Derartige Verzögerungen bzw. Beschleunigungen werden dann auch auf Nebenaggregate übertragen, die über den Riementrieb angetrieben werden. Häufig besteht jedoch die Forderung, dass die Nebenaggregate mit möglichst gleichförmigen Drehzahlen arbeiten.

So ist es beispielsweise bei einem Riementrieb der zuvor erläuterten Art möglich, dass ein Motor und ein Startergenerator durch einen einzigen Riemen miteinander gekoppelt sind. Im sogenannten Starterbetrieb treibt der Starter den Motor an. Im sogenannten Generatorbetrieb treibt hingegen der Motor den Startergenerator an, was gegenüber dem Starterbetrieb mit einer Drehmoment einhergeht. Damit ist in einem derartigen Riementrieb einmal ein Trum ein Leertrum oder ein Lasttrum. In einem solchen Riementrieb können auch noch weitere Nebenaggregate integriert sein. Ein Beispiel eines solchen Riementriebs mit Spannvorrichtung ist in der DE 42 43 451 A1 offenbart. Eine sehr ähnliche Spannvorrichtung ist auch aus der EP 0 757 190 A1 bekannt. In dieser Spannvorrichtung sind zwei Spannarme um eine gemeinsame Drehachse zueinander verdrehbar. Sie werden über eine koaxial zur gemeinsamen Drehachse angeordnete Schraubenfeder aufeinander zu gedrückt.

In der DE 196 31 507 A1 ist eine Spannvorrichtung für einen eine topfförmige Riemenscheibe aufweisenden Riementrieb mit einer sich über einen einzigen Hebel an einem Federelement abstützenden Spannrolle beschrieben. Der Hebel ist um die Drehachse der Riemenscheibe verschwenkbar. Ein als Spiralfeder ausgebildetes Federelement ist vorzugsweise koaxial zur Drehachse im Wesentlichen innerhalb der topfförmigen Riemenscheibe angeordnet. Damit soll eine äußerst kompakte Bauweise erzielbar sein, wobei die Spannvorrichtung ferner als Vormontageinheit ausgebildet sein kann. Integriert in die Spannvorrichtung ist ferner ein Bewegungsdämpfer, der hier aus einer topfförmigen Dämpfungsplatte und einer Reibplatte besteht. Diese beiden Elemente umgeben die im Ausführungsbeispiel mehrlagig angeordneten Spiralfedern. Zur Erzielung der notwendigen Federung und Dämpfung ist ein relativ großer Durchmesser der Spiralfedern und damit auch der Dämpfungsplatte notwendig. Oftmals ist aber dieser freie Raum in beispielsweise einem Motorraum eines Fahrzeugs nicht vorhanden.

Die DE 199 26 612 A1, die in der genannten DE 42 43 451 A1 als Stand der Technik genannt ist, beschreibt einen Riemenantrieb einer Brennkraftmaschine, insbesondere einen Riementrieb, bei dem im Riementrieb ein sogenannter Starter-Generator angeordnet ist. Hier sind zwei Spannarme mit Spannrollen gezeigt, wobei die Spannarme durch eine Spannfeder aufeinander zu gedrückt werden. Die Spannrollen sind außerhalb der von dem Riemen umspannten Fläche angeordnet. Die gemeinsame Drehachse der Spannarme befindet sich jedoch innerhalb der von dem Riemen umspannten Fläche. Dadurch sollen die bezüglich der DE 42 43 451 A1 beschriebenen Nachteile vermieden werden.

In der DE 198 49 886 A1 ist ein Riementrieb offenbart, insbesondere für Brennkraftmaschinen zum Antrieb von Nebenaggregaten eines Fahrzeuges. Dieser bekannte Riementrieb weist in üblicher Weise mindestens zwei Riemenscheiben auf. Sowohl am Leertrum wie auch am Lastrum liegt jeweils eine Spannrolle unter Federkraft an. Dadurch ist es beispielsweise möglich, in beide Richtungen Drehmomente zu übertragen und so den Generator einer Brennkraftmaschine auch als Starter zu verwenden. Die beiden Spannrollen können sich gegenseitig elastisch abstützen, beispielsweise durch eine zwischen ihnen angeordnete vorgespannte Feder, insbesondere eine Zugfeder. Diese Ausbildung mit einer Zugfeder ist allerdings gemäß den offenbarten Ausführungsformen relativ aufwendig und eine Dämpfung ist nicht ersichtlich.

Eine Riemenspanneinrichtung mit lamellenförmigem Gleitlagerring ist aus der DE 44 28 560 A1 bekannt. Bei diesem Riemen- oder Kettenspanner ist zwischen einer gehäusefesten Schwenkachse und einer spannarmfesten Hülse ein Gleitlagerring angeordnet. Der Spannarm ist über eine Drehstabfeder und einem mit dieser Drehstabfeder drehfest verbundenem Radialflansch reibschlüssig mit einem Gehäuse gekoppelt. Eine konzentrisch auf der Drehstabfeder angeordnete Schraubendrehfeder koppelt den Spannarm mit dem Gehäuse. Durch diese Anordnung soll eine gewünschte Dämpfung mittels des Gleitlagerrings im Wesentlichen nur in einer Schwenkrichtung des Spannarms wirksam sein. Hierzu sind insbesondere schmale und flexible Lamellen in dem Gleitlagerring vorgesehen.

Auch die DE 44 31 801 A1 zeigt eine Spanneinrichtung mit richtungsabhängigem Dämpfer. Hier ist wiederum ein Spannarm über eine Drehstabfeder mit einem Gehäuseteil gekoppelt. Zwischen einem Ende der Drehstabfeder und dem Gehäuse ist eine Reibscheibe vorgesehen. Zur Drehstabfeder ist eine Schraubendrehfeder konzentrisch angeordnet und drückt den Spannarm von dem Gehäuse weg, so dass die mit dem Spannarm drehfest verbundene Drehstabfeder und dem daran angebrachten Flansch gegen die Reibscheibe drückt.

Des Weiteren ist aus der DE 37 19 794 A1 ein Schwenklager bekannt, mit dem zwei zueinander drehbar gelagerte Maschinenteile verdrehbar zueinander über eine Bandfeder gekoppelt sind. Ein Reibring ist zwischen einem Fußteil und einem Tragkörper mit Federvorspannung eingesetzt, die durch eine in eine Topfhülse eingebördelte Tellerfeder erzeugt wird. Hiermit soll ein Schwenklager geschaffen werden, das bei ausreichender Federkraft eine günstigere Lastverteilung im Lager aufweist und weniger zu Eigenschwingungen neigt.

Schließlich ist noch die gattungsgemäße DE 3912944 A1 zu nennen, die eine Riemenspannvorrichtung offenbart, bei der mindestens ein Spannelement, ein Spannhebel und eine am freien Ende des Spannhebels vorgesehene Spannrolle oder Spannriemenscheibe vorhanden ist. Das Spanneelement ist als Drehstab ausgebildet. Vorzugsweise sind drei Drehstäbe vorgesehen, die eine möglichst große Kontaktfläche aufweisen.

### DARSTELLUNG DER ERFINDUNG

Das der Erfindung zugrunde liegende technische Problem besteht darin, eine Feder-und Dämpfungsvorrichtung bereitzustellen, die in kompakter Bauweise und technisch einfach und kostengünstig eine Dreh- bzw. Schwenkbewegung federt und dämpft.

Gemäß einem Aspekt der vorliegenden Erfindung wird zur Lösung dieses technischen Problems eine Feder- und Dämpfungsvorrichtung zum Federn und Dämpfen der Dreh- bzw. Schwenkbewegung von zumindest einem dreh- bzw. schwenkbar und federnd gelagerten Hebelarm offenbart. Die erfindungsgemäße Feder- und Dämpfungsvorrichtung umfasst einen ersten Hebelarm, der um eine Drehachse dreh- bzw. schwenkbar gelagert ist. Es ist des Weiteren ein sich längs der Drehachse erstreckendes, auf Verdrehung beanspruchtes Federmittel vorgesehen, das zwei voneinander beabstandete Federendbereiche aufweist, von denen ein erster Federendbereich drehfest mit dem ersten Hebelarm verbunden ist. Es ist ein Hohlzylinder vorhanden, in dessen Zylinderinnenraum das auf Verdrehung beanspruchte Federmittel untergebracht ist und das an einem Zylinderendbereich mit dem zweiten Federendbereich des Federmittels drehfest verbunden ist. Zumindest ein Dämpfungselement ist am Hohlzylinder, innen oder außenseitig, drehfest, aber in Richtung der Drehachse verschiebbar angeordnet ist und mit dem zweiten Federendbereich des auf Verdrehung beanspruchten Federmittels drehfest verbunden. Zumindest ein Reibelement steht zur Dämpfung einer Drehbewegung mit dem Dämpfungselement in Reibkontakt. Eine Feder drückt gegen das zumindest eine Dämpfungselement und bewirkt damit ein vorbestimmtes Reibmoment zwischen dem Dämpfungselement und dem Reibelement zur Dämpfung der Drehbewegung.

Anzumerken ist, dass unter dem Begriff Federendbereich insbesondere derjenige Bereich des auf Verdrehung beanspruchten Federmittels zu verstehen ist, der nicht den eigentlichen Beitrag der Torsionsfederung liefert.

Der Erfindung liegt der grundsätzliche Gedanke zugrunde, erstmals ein sehr kompakt bauendes und insbesondere einen kleinen Durchmesser aufweisendes, auf Verdrehung beanspruchtes Federmittel als Federung des zumindest einen Hebelarmes vorzusehen und diesem Federmittel eine Dämpfung nachzuschalten. Durch diese Ausgestaltung kann eine Feder- und Dämpfungsvorrichtung mit geringem Durchmesser und kompakter Form erzielt werden. Auch der technische Aufwand ist gering, wodurch die Herstellungskosten reduziert werden.

In einer beispielhaften Ausführungsform der vorliegenden Erfindung wird das zumindest eine Reibelement mittels einer Feder gegen das Dämpfungselement gedrückt. Damit ist über die Feder das Reibmoment und damit der Dämpfungswert einstellbar. Das Dämpfungselement kann beispielsweise eine drehfest mit dem Federmittel verbundene Scheibe sein, auf deren Seitenflächen ein oder mehrere Reibelemente einwirken, ähnlich einer Scheibenbremse.

Für eine beispielhafte Anwendung ist es unter Umständen zweckmäßig, das Reibelement beispielsweise als Teil einer Halterung vorzusehen, in der der Hohlzylinder drehbar gelagert ist. Bei letzterer beispielhafter Ausführungsform der vorliegenden Erfindung erfolgt eine Reibwirkung zwischen dem auf dem Hohlzylinder verschiebbar aber drehfest angebrachten Dämpfungselement und einem Teil der Halterung des Hohlzylinders. Die Feder stützt sich hier gegen ein auf dem Hohlzylinder fest angebrachtes Stützelement oder gegen ein anderes Teil der Halterung ab.

Zur Erhöhung der Dämpfung ist bei einer weiteren beispielhaften Ausführungsform der vorliegenden Erfindung ein Hohlzylinder vorhanden, in dessen Innenraum die das auf Verdrehung beanspruchte Federmittel untergebracht ist. An einem Zylinderendbereich ist der Hohlzylinder mit dem zweiten Federendbereich des Federmittels drehfest verbunden. Es sind nunmehr zwei Dämpfungselemente auf dem Hohlzylinder drehfest, aber in Richtung der Drehachse verschiebbar angeordnet. Zwischen den beiden Dämpfungselementen ist eine Feder angeordnet, die die zwei Dämpfungselemente voneinander weg, gegen jeweils ein Reibelement drückt und damit ein vorbestimmtes Reibmoment zwischen jeweils einem Dämpfungselement und einem Reibelement bewirkt. Die Reibelemente können jeweils Teil einer Halterung für den Hohlzylindersein. Beispielsweise können die Teile der Halterung, die als Reibelemente wirken, die einander zugewandten Innenseiten einer Art Gabel mit Durchgangsbohrungen zur Aufnahme des Hohlzylinders sein.

Um eine größtmögliche Ausnutzung des begrenzten Bauraums zu erzielen, weisen die Dämpfungselemente jeweils eine Kegelmantelfläche als Reibfläche auf, die jeweils mit entsprechend geformten Reibflächen der Reibelemente in Reibkontakt sind. Damit lassen sich die Reibflächen vergrößern und damit die Dämpfung erhöhen.

Eine weitere beispielhafte Ausführungsform sieht vor, dass ein zweiter Hebelarm vorhanden ist, der wie der erste Hebelarm um die Drehachse drehbar gelagert ist. Hervorzuheben ist, dass auch der zweite Hebel um die gleiche Drehachse wie der erste Hebelarm drehbar ist. Der zweite Hebelarm ist aber dann mit dem Dämpfungselement drehfest verbunden, also beispielweise mit einem Zylinderendbereich des zuvor erwähnten Hohlzylinders. Damit ist es möglich, die zwei Hebel auf der gleichen Seite des Federmittels anzuordnen, die beiden Hebel aber über das Federmittel und den Hohlzylinder federnd zu verbinden.

Eine beispielhafte Ausführungsform der vorliegenden Erfindung sieht vor, dass die Torsionsfeder ein auf Verdrehung beanspruchtes Federmittel ist. Um insbesondere die Dämpfung noch zu erhöhen, ist in einer weiteren beispielhaften Ausführungsform das auf Verdrehung beanspruchte Federmittel aus einer oder mehreren Blattfedern aufgebaut. Im Falle mehrerer Blattfedern, die auch als Blattfederpaket bezeichnet werden können, reiben die aneinanderliegende Seiten der Blattfedern bei einer Verdrehung aneinander und federn damit die Drehbewegung nicht nur, sondern dämpfen diese auch gleichzeitig.

Bei jeder der zuvor genannten beispielhaften Ausführungsformen kann es zweckmäßig sein, das mit dem Federmittel drehfest verbundene Dämpfungselement, insbesondere der Hohlzylinder in einer Halterung drehbar zu lagern. Bei einer beispielhaften Ausführungsform mit einer solchen Halterung kann vorgesehen sein, dass das oder die Dämpfungselemente in der Halterung integriert sind. Beispielsweise können die Halterung als auch die Dämpfungselemente aus Aluminium- oder Stahlguss bestehen. Die Dämpfungselemente könnten auch in die Halterung eingesetzte Buchse aus einem geeigneten Material sein, beispielsweise Kunststoffbuchsen.

Für eine Spannvorrichtung eines Riementriebs kann bei einer beispielhaften Ausführungsform der vorliegenden Erfindung ein Hebelarm oder beide Hebelarme als Spannarm mit daran angeordnetem Spannmittel ausgebildet sein. Als Spannmittel kommen insbesondere Spannrollen zum Einsatz.

Eine Spannvorrichtung mit der Feder- und Dämpfungsvorrichtung nach einem der voranstehenden Ausführungsbeispiele kann außerhalb der Innenfläche, die von einem Riemen umschlossen wird, angeordnet sein, so dass die Spannmittel von Außen auf den Riemen angedrückt werden, wobei dann die Drehachse der Spannhebel innerhalb oder außerhalb der vom Riemen umschlossenen Innenfläche liegen kann.

Eine weitere beispielhafte Ausführungsform sieht vor, dass die Feder- und Dämpfungsvorrichtung bzw. Spannvorrichtung nach einem der voranstehenden Ausfiihrungsbeispiele für einen Zugmitteltrieb vorgesehen ist, der den Antrieb eines Startergenerators und möglicherweise weiterer Aggregate einschließt. Das Zugmittel, ein Riemen, umschlingt bzw. verbindet dabei die Riemenscheiben. ein erstes Spannmittel, wie beispielsweise ein Spannarm mit Spannrolle, ist gegen die Außenseite des Trums zwischen der Riemenscheibe des Motors und der Riemenscheibe des Startergenerators spannbar. Ein zweites Spannmittel ist an dem Trum zwischen der Riemenscheibe des Startergenerators und beispielsweise der Riemenscheibe eines weiteren Aggregates spannbar. Die Spannung, wird über das auf Verdrehung beanspruchte Federmittel, insbesondere ein mehrschichtiges Blattfederpaket erzeugt, die Dämpfung über die zuvor erläuterten Dämpfungsmittel und Reibmittel.

### KURZE BESCHREIBUNG DER ZEICHNUNGEN

Im Folgenden sind zur weiteren Erläuterung und zum besseren Verständnis mehrere beispielhafte Ausführungsformen der vorliegenden Erfindung unter Bezugnahme auf die nachfolgenden Zeichnungen näher beschrieben. Es zeigt:
- Fig. 1: einen Längsschnitt einer Spannvorrichtung mit einer erfindungsgemäßen Feder- und Dämpfungsvorrichtung, bei der zwei Spannarme über ein auf Verdrehung beanspruchtes Federmittel federnd miteinander gekoppelt sind und deren Dreh- bzw. Schwenkbewegung gedämpft wird;
- Fig. 2: eine perspektivische Ansicht von schräg oben auf die Spannvorrichtung gemäß der Fig. 1;
- Fig. 3: eine Schnittansicht der Spannvorrichtung mit erfindungsgemäßer Feder- und Dämpfungsvorrichtung entlang der Linie B-B in Fig. 1;
- Fig. 4: eine schematische Seitenansicht auf einen Riementrieb, in den ein Verbrennungsmotor, ein Fahrzeug-Generator als auch ein Starter integriert sind, wobei außerhalb des Riementriebs eine Spannvorrichtung gemäß den Fig. 1 bis 3 zum korrekten Spannen des Riementriebs, unabhängig von der Laufrichtung des Riemens, angeordnet ist, und
- Fig. 5: eine schematische Seitenansicht einer beispielhaften weiteren Ausführungsform einer Spannvorrichtung mit erfindungsgemäßer Feder- und Dämpfungsvorrichtung mit nur einem Spannarm.

### Beschreibung beispielhafter Ausführungsformen der vorliegenden erfindung

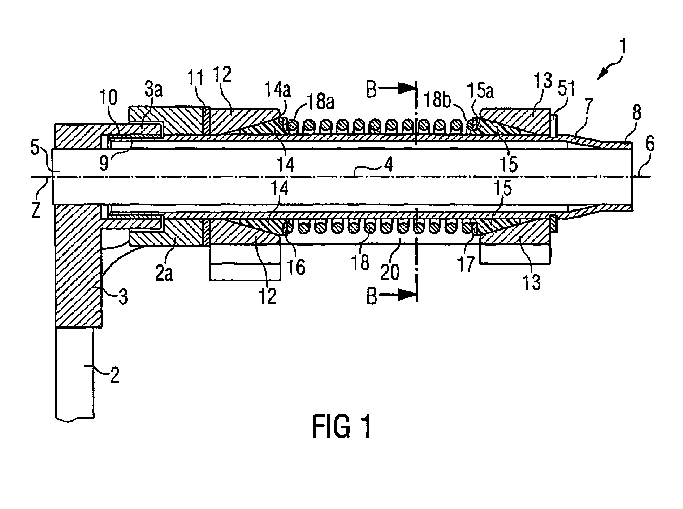

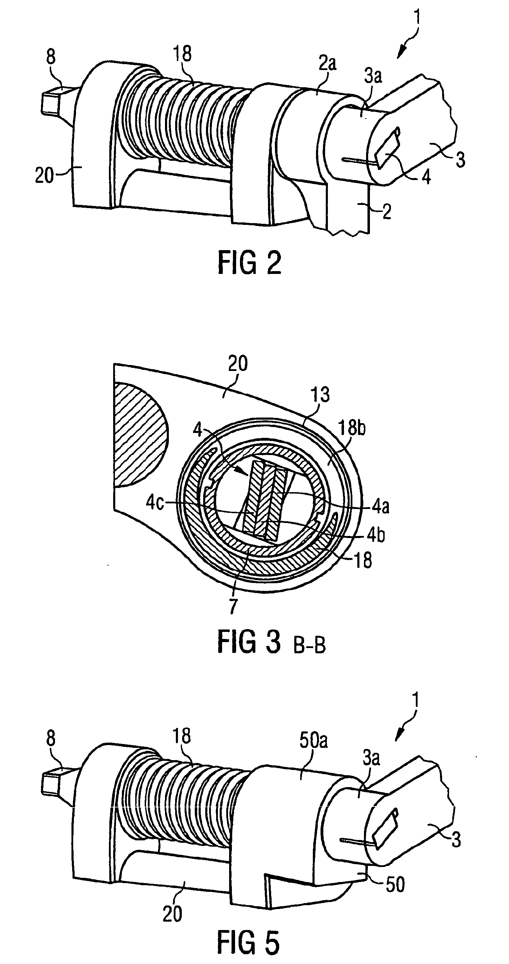

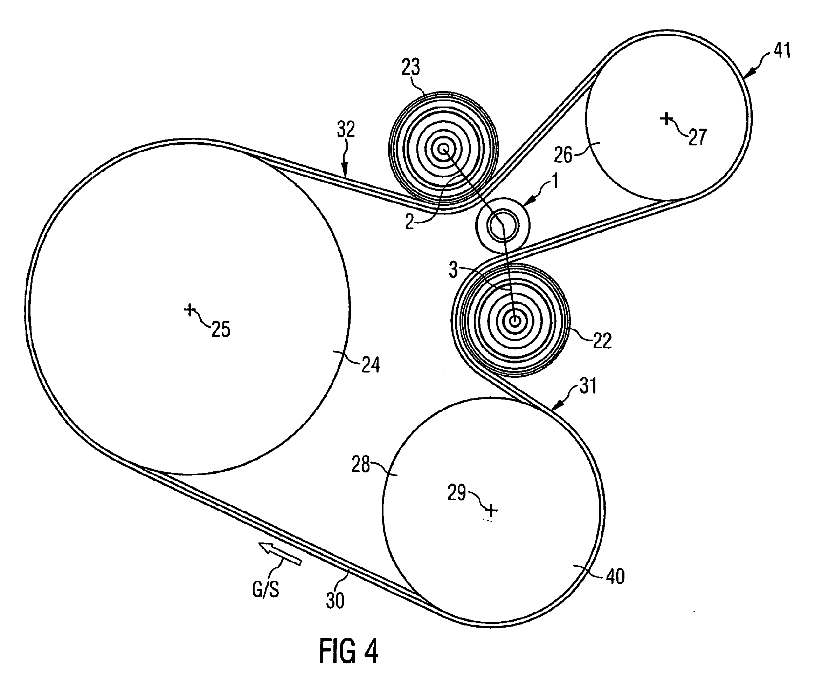

Eine erste beispielhafte Ausführungsform einer erfindungsgemäßen Feder- und Dämpfungsvorrichtung, die in einer Spannvorrichtung 1 integriert ist, ist in den Fig. 1 bis 4 gezeigt. Wie aus dem Längsschnitt der Fig. 1 und der Perspektivansicht gemäß der Fig. 2 bzw. der Seitenansicht gemäß der Fig. 4 ersichtlich ist, umfasst die Spannvorrichtung 1 zwei Spannarme 2, 3, an denen jeweils an einem freien Ende eine Spannrolle 22, 23 frei drehbar angeordnet ist. Der Spann- bzw. Hebelarm 2 besitzt an dem der Spannrolle 23 gegenüberliegenden anderen Ende ein Auge 2a, in dem eine Durchgangsbohrung eingebracht ist. Der andere Spannarm 3 besitzt ebenfalls an dem der zugehörigen Spannrolle 22 gegenüberliegenden freien Ende ein Auge 3a, in dem ebenfalls eine Durchgangsbohrung vorhanden ist. Diese Durchgangsbohrung ist gestuft ausgeführt, so dass eine Bohrung mit größerem Durchmesser und eine Bohrung mit kleinerem Durchmesser, wie in der Fig. 1 ersichtlich, in dem Auge 3a vorhanden ist.

In der Bohrung mit dem kleineren Durchmesser des Auges 3a des Spannarmes 3 ist ein Federendbereich 5 eines auf Verdrehung beanspruchten Federmittels 4, beispielsweise eine Drehstabfeder, drehfest eingepresst. Selbstverständlich können der Spannarm 3 und das auf Verdrehung beanspruchte Federmittel 4 auch durch Formschluss oder durch Form- und Reibschluss drehfest miteinander verbunden sein. Beispielsweise wäre auch ein Vielnutprofil im Endbereich 5 und ein entsprechendes Gegenprofil im Auge 3a des Spannhebels 3 zur drehfesten Verbindung der zwei Elemente 3, 4 denkbar.

Das auf Verdrehung beanspruchte Federmittel 4 ist langgestreckt und weist einen weiteren freien Federendbereich 6 auf. Dieser Federendbereich 6 ist mit einem Hohlzylinder 7 drehfest verbunden. Der Hohlzylinder 7 weist hierzu ein gestauchtes Zylinderende 8 auf, das den Federendbereich 6 des Federmittels 4 reibschlüssig umgreift. Es kann unter Umständen auch eine reib- und/oder formschlüssige Verbindung ausgeführt werden. Damit ist das auf Verdrehung beanspruchte Federmittel 4 mit dem Zylinderende 8 des Hohlzylinders 7 drehfest verbunden.

Der Hohlzylinder 7 ist über das Federmittel 4 geschobenen, so dass das Federmittel zumindest größtenteils in dem Inneren des Hohlzylinders 7 aufgenommen ist, was eine kompakte Bauweise ermöglicht. Das andere Zylinderende 9 des Hohlzylinders 7 erstreckt sich bis in die Stufenbohrung im Auge 3a des Spannarmes 3. Dort ist der Spann- bzw. Hebelarm 3 auf dem Hohlzylinder 7 drehbar gelagert. Hierzu ist das Zylinderende 9 des Hohlzylinders 7 um einen gewissen Betrag am Außenumfang abgedreht, so dass eine Buchse 10 einwandfrei darauf aufzupassen ist und ein einwandfreier Gleitsitz der Buchse 10 und des Spannarmes 3 gewährleistet ist.

Wie insbesondere aus der Schnittdarstellung der Fig. 1 ersichtlich ist, sitzt das Auge 2a des Spannarmes 2 ebenfalls auf dem Hohlzylinder 7 im Bereich des Zylinderendes 9. Das Auge 2a weist hierzu eine außenseitige Stufenbohrung auf, in der das Auge 3a des Spannarmes 3 teilweise eingeschoben ist. Allerdings ist, was aus der Fig. 1 nicht unmittelbar ersichtlich ist, hervorzuheben, dass das Auge 2a des Spannarmes 2 auf dem Hohlzylinder 7 drehfest aufgebracht ist, beispielsweise durch Aufpressen. Wiederum kann natürlich auch ein Formschluss zwischen den beiden Elementen 2, 7 vorgesehen werden.

Aus den obigen Ausführungen ist somit zu entnehmen, dass der Spannarm 2 und der Spannarm 3 in Bezug auf eine Dreh- bzw. Schwenkbewegung eines der Spannarme 2, 3 um die gemeinsame Drehachse Z über das Federmittel 4 federnd gekoppelt sind. Je nach Torsionssteifigkeit des langgestreckten bzw. länglichen, auf Verdrehung beanspruchten Federmittels 4 ist die Federung weicher oder härter.

Die Federhärte kann durch entsprechende Materialwahl oder Dimensionierung des Federmittels 4 an den jeweiligen Verwendungszweck der Spannvorrichtung 1 angepasst werden. Eine kompakte Bauweise ist dabei weiterhin erzielbar. Insbesondere der Durchmesser einer solchen Federkopplung ist gering. Eine äußerst kostengünstige und effektive Maßnahme zur Festlegung der Federhärte des Federmittels 4 besteht darin, das Federmittel 4 nicht als an sich bekannten Torsionsfederstab auszuführen, sondern aus aufeinandergeschichteten Blattfedern 4a, 4b, 4c aufzubauen.

Ein entsprechender Aufbau ist insbesondere aus der Schnittansicht aus der Fig. 3 ersichtlich. Hier besteht das Federmittel 4 aus drei aufeinanderliegenden Blattfedern 4a, 4b, 4c, die bei einer Verdrehung der Spannarme 2, 3 relativ zueinander um die Drehachse 6 aneinander reiben und damit nicht nur eine Federung sondern auch eine Dämpfung der Relativdrehbewegung der zwei Spannarme zueinander leistet.

Eine zusätzliche Dämpfung der relativen Drehbewegung der Spannarme 2, 3 wird durch die nachfolgende Dämpfungsanordnung gewährleistet. Gemäß der Schnittansicht der Fig. 1 sind zwischen dem Zylinderende 8 und dem Zylinderende 9 auf dem Hohlzylinder 7 zwei Kunststoffkonen 14, 15 auf dem Außenumfang des Hohlzylinders 7 beabstandet voneinander angeordnet. Die Konen 14, 15 sind zwar auf dem Hohlzylinder 7 drehfest angeordnet, jedoch in Längsrichtung, d.h. in Richtung der Drehachse Z verschiebbar. Hierzu können beispielsweise am Außenumfang des Hohlzylinders 7 eine oder mehrere Längsnuten eingeformt bzw. eingefräst sein, in denen entsprechende Federn an den Innenumfängen der Kunststoffkonen 14, 15 passen.

Die zwei Kunststoffkonen 14, 15 haben jeweils Kegelmantelflächen, die, wie in der Fig. 1 gezeigt, voneinander abgewandt sind. An den jeweiligen, den Kegelmantelflächen der Kunststoffkonen 14, 15 abgewandten Stirnseiten 14a, 15a sind Aufnahmesitze für jeweils einen Abstützring 16, 17 vorhanden, auf denen die Enden 18a, 18b einer als Schraubenfeder ausgebildeten Druckfeder 18 drücken. Durch die Druckfeder 18 werden die Kunststoffkonen 14, 15 voneinander weggedrückt. Dabei sind die Konen 14, 15 in den Nutprofilen geführt, das heißt, längs der Drehachse Z. Auf den Kegelmantelflächen der Kunststoffkonen 14, 15 sitzen jeweils entsprechend geformte Reibelemente 12, 13, die entsprechende konische Innenbohrungen aufweisen. Die Reibelemente 12, 13 sind als Teil einer Halterung 20 ausgebildet, was insbesondere aus der Perspektivansicht gemäß der Fig. 2 ersichtlich ist. Zwischen dem Reibelement 12, das Teil der Halterung 20 ist, und dem Auge 2a des Spannarms 2 ist eine Gleitscheibe 11 eingelegt, die zur Reibungsminderung bei einer Drehbewegung des Spannarms 2 dient. Der Hohlzylinder 7 ist über einen Sicherungsring 51 relativ zum Reibelement 13 in Richtung der Drehachse Z festgelegt.
Durch die Kegelmantelflächen wird eine große Reibung erzielt, wodurch eine vorbestimmte Dämpfung der Relativdrehbewegung der Spannarme 2, 3 zusätzlich zu der inneren Reibung des Federmittels 4 erzielbar ist. Durch entsprechende Wahl der Schraubenfeder 18 kann dieser Dämpfwert relativ genau festlegt werden.

Diese erste beispielhafte Ausführungsform der Erfindung kann, wie in der Fig. 4 gezeigt, außerhalb eines Riementriebs angeordnet werden. Der in der Fig. 4 gezeigte Riementrieb umfasst einen Riemen 30, der eine Riemenscheibe 24 eines Verbrennungsmotors, die auf der Kurbelwelle 25 sitzt, umschlingt. Ferner verbindet der Riementrieb einen Klimakompressor 40 vorhanden, der eine Drehachse 29 aufweist, auf der eine Riemenscheibe 28 sitzt. Die Riemenscheibe 28 wird ebenfalls vom Riemen 30 umschlungen. Schließlich ist auch ein Startergenerator 41 vorhanden, der eine Riemenscheibe 26 umfasst, die auf einer Drehachse 27 des Startergenerators 41 sitzt. Auch diese Riemenscheibe 26 wird von dem Riemen 30 umschlungen. Außerhalb, in der Fig. 4 "schräg oberhalb" der Drehachse 27 des Startergenerators 41, ist die Drehachse Z der Spannvorrichtung 1 angeordnet. Die Spannarme 2, 3 und die jeweiligen zugehörigen Spannrollen 22, 23 berühren den Riemen 30 von außen.

In dem in Fig. 4 gezeigten Startbetrieb läuft der Riemen im Uhrzeigersinn, d.h. die Riemenscheibe 24 des Verbrennungsmotors wird aktiv vom Startergenerator 41 gedreht und soll damit den Motor starten. In diesem Betrieb ist über das auf Verdrehung beanspruchte Federmittel 4 die Vorspannung der Spannarme 2, 3 so gewählt, dass die Spannrolle 22 auf der Lostrumseite 31 relativ stark eindrückt, wohingegen die Spannrolle 23 auf der Lasttrumseite 32 so gut wie nicht vom Riemen 30 umschlungen wird. Wechselt nun der Betriebsmodus des Startergenerators 41 in den Generatorbetrieb, so wechseln auch die Belastungsverhältnisse im Riementrieb. In diesem Fall ist die bisherige Lastrumseite 32 die Leertrumseite und die Lastrumseite 31 wird die Leertrumseite. Im Generatorbetrieb - d.h. der Motor treibt den Riemen 30 - ist die Riemenscheibe 24 die Treibscheibe und über die Riemenscheibe 26 des Startergenerators 41 wird die elektrische Versorgung sichergestellt. Die Spannrolle 23 ist nun vom Riemen 30 über einen größeren Scheibenumfang umschlungen, wohingegen die Spannrolle 23 des Spannarmes 3 so gut wie nicht umschlungen wird. Die im Betrieb auftretenden Schwingungen, die sich in Drehbewegungen der Spannarme 2, 3 bemerkbar machen können, werden durch das Federmittel 4 abgefedert und sowohl durch die innere Reibung in dem auf Verdrehung beanspruchten Federmittel 4 als auch durch die separate Dämpfungseinrichtung mit den Kunststoffkonen 14, 15, der dazwischenliegenden Schraubenfeder 18 und den Reibelementen 12, 13 gedämpft.

Eine weitere beispielhafte Ausführungsform der Erfindung ist in der Fig. 5 gezeigt. Diese entspricht bis auf den Spannarm 2 der in der Fig. 2 gezeigten Ausführungsform. Hier ist anstatt eines Spannarms 2 eine Abstützung 50 vorhanden, die ein Auge 50a aufweist, in dem der Hohlzylinder 7 drehfest eingepresst ist. Die Abstützung 50 wird wie die Halterung 20 an einem Gehäuse- oder Fahrzeugteil fest montiert. Insbesondere kann das Gehäuse des Startergenerators 41 zur Befestigung der Halterung 20 und der Abstützung vorgesehen werden. Die Abstützung 50 könnte auch einstückig mit der Halterung 20 ausgebildet werden.

### BEZUGSZEICHENLISTE

- 1: Spannvorrichtung
- 2: Spannarm
- 2a: Spannarmauge
- 3: Spannarm
- 3a: Spannarmauge
- 4: auf Verdrehung beanspruchtes Federmittel
- 5: Federendbereich
- 6: Federendbereich
- 7: Hohlzylinder
- 8: Zylinderende
- 9: Zylinderende
- 10: Gleitbuchse
- 11: Gleitscheibe
- 12: Reibelement
- 13: Reibelement
- 14: Kunststoffkonus
- 15: Kunststoffkonus
- 16: Abstützring
- 17: Abstützring
- 18: Druckfeder
- 18a: Druckfederende
- 18b: Druckfederende
- 19: -
- 20: Halterung
- 21: -
- 22: Spannrolle
- 23: Spannrolle
- 24: Riemenscheibe
- 25: Kurbelwelle
- 26: Riemenscheibe
- 27: Drehachse Startergenerator
- 28: Riemenscheibe des Klimakompressors
- 29: Drehachse
- 30: Riemen
- 31: Leertrum
- 32: Lastrum
- 33-39: -
- 40: Klimakompressor
- 41: Startergenerator
- 42-49: -
- 50: Abstützung
- 50a: Abstützungsauge
- 51: Sicherungsring
- Z: Drehachse

## Patentansprüche

1. Feder- und Dämpfungsvorrichtung zum Federn und Dämpfen der Schwenkbewegung von zumindest einem schwenkbar und federnd gelagerten Hebelarm (2, 3), mit:
- einem ersten Hebelarm (3), der um eine Drehachse (Z) drehbar gelagert ist,
- ein sich längs der Drehachse (Z) erstreckendes, auf Verdrehung beanspruchtes Federmittel (4), das zwei voneinander beabstandete Federendbereiche (5,6) aufweist, von denen ein erster (5) drehfest mit dem ersten Hebelarm (3) verbunden ist, **dadurch gekennzeichnet, dass** die Feder- und Dämpfungsvorrichtung umfasst
- einen Hohlzylinder (7), in dessen Zylinderinnenraum das auf Verdrehung beanspruchte Federmittel (4) untergebracht ist und der an einem Zylinderendbereich (8) mit dem zweiten Federendbereich (6) des Federmittels (4) drehfest verbunden ist,
- zumindest ein Dämpfungselement (14, 15), das am Hohlzylinder (7) drehfest, aber in Richtung der Drehachse (Z) verschiebbar angeordnet ist und das mit dem zweiten Federendbereich (6) des auf Verdrehung beanspruchten Federmittels (4) drehfest verbunden ist,
- zumindest ein Reibelement (12,13), das zur Dämpfung einer Drehbewegung mit dem Dämpfungselement (7,14,15) in Reibkontakt steht, und
- eine Feder (18), die gegen das zumindest eine Dämpfungselement (14, 15) drückt und damit ein vorbestimmtes Reibmoment zwischen dem Dämpfungselement (14,15) und dem Reibelement (12,13) zur Dämpfung der Drehbewegung bewirkt.

2. Feder- und Dämpfungsvorrichtung nach Anspruch 1,
**dadurch gekennzeichnet, dass**
- zwei Dämpfungselemente (14, 15) am Hohlzylinder (7) drehfest, aber in Richtung der Drehachse (Z) verschiebbar angeordnet sind, und
- die Feder (18) zwischen den zwei Dämpfungselementen (14, 15) angeordnet ist, wobei die Feder (18) die zwei Dämpfungselemente (14, 15) voneinander weg und gegen jeweils ein Reibelement (12,13) drückt und damit ein vorbestimmtes Reibmoment zwischen jeweils einem Dämpfungselement (14,15) und einem Reibelement (12,13) bewirkt.

3. Feder- und Dämpfungsvorrichtung nach einem der voranstehenden Ansprüche,
**dadurch gekennzeichnet, dass** die Dämpfungselemente (14, 15) jeweils eine Kegelmantelfläche als Reibfläche aufweisen, die jeweils mit entsprechend geformten Reibflächen der Reibelemente (12,13) in Reibkontakt sind.

4. Feder- und Dämpfungsvorrichtung nach einem der Ansprüche 1-4,
**dadurch gekennzeichnet, dass** das zumindest eine Reibelement (12,13) Teil einer Halterung (20) ist, in dem der Hohlzylinder (7) drehbar gelagert ist.

5. Feder- und Dämpfungsvorrichtung nach einem der voranstehenden Ansprüche,
**dadurch gekennzeichnet, dass** ein zweiter Hebelarm (2) vorhanden ist, der wie der erste Hebelarm (3) um die Drehachse (Z) drehbar gelagert ist.

6. Feder- und Dämpfungsvorrichtung nach Anspruch 5,
**dadurch gekennzeichnet, dass** der zweite Hebelarm (2) mit dem Dämpfungselement (14, 15) drehfest verbunden ist.

7. Feder- und Dämpfungsvorrichtung nach Anspruch 5 oder 6,
**dadurch gekennzeichnet, dass** der zweite Hebelarm (2) mit dem Hohlzylinder (7) drehfest verbunden ist.

8. Feder- und Dämpfungsvorrichtung nach einem oder mehreren der voranstehenden Ansprüche, **dadurch gekennzeichnet, dass** das Federmittel (4) aus einer oder mehreren Blattfedern (4a, 4b, 4c) besteht.

9. Feder- und Dämpfungsvorrichtung nach einem der voranstehenden Ansprüche,
**dadurch gekennzeichnet, dass** der mit dem torsionsbeanspruchten Federmittel (4) drehfest verbundene Hohlzylinder (7) in einer Halterung (12,13,20) drehbar gelagert ist.

10. Feder- und Dämpfungsvorrichtung nach einem der voranstehenden Ansprüche,
**dadurch gekennzeichnet, dass** das die Reibelemente (12, 13) in der Halterung (20) integriert sind.

11. Feder- und Dämpfungsvorrichtung nach einem der voranstehenden Ansprüche,
**dadurch gekennzeichnet, dass** einer oder beide Hebelarme als Spannarme (2, 3) mit daran angeordnetem Spannmittel (22, 23) ausgebildet sind und die Spannmittel (2, 3) zum Spannen eines Riemens (30) in einem Riementrieb ausgebildet sind.

12. Feder- und Dämpfungsvorrichtung nach Anspruch 11,
**dadurch gekennzeichnet, dass** der Riemen (30) eine Innenfläche umschließt und die Feder- und Dämpfungsvorrichtung außerhalb der Innenfläche angeordnet ist.

13. Feder- und Dämpfungsvorrichtung nach Anspruch 12,
**dadurch gekennzeichnet, dass** der Riemen (30) einem Zugmitteltrieb eines Motors, insbesondere eine Brennkraftmaschine, zugeordnet ist, der den Antrieb eines Startergenerators (41) und zumindest eines weiteren Aggregates (40) einschließt.

14. Feder- und Dämpfungsvorrichtung nach Anspruch 13,
**dadurch gekennzeichnet, dass** der Riemen (30) eine Riemenscheibe (24) des Motors, eine Riemenscheibe (26) des Startergenerators (41) und eine Riemenscheibe des Aggregates (40) umschlingt und ein Spannmittel (23) gegen den Trum zwischen der Riemenscheibe (24) des Motors und der Riemenscheibe (26) des Startergenerators (41) spannbar ist und ein Spannmittel (22) gegen den Trum zwischen der Riemenscheibe (28) des Aggregates (40) und der Riemenscheibe (26) des Startergenerators (41) spannbar ist.

15. Feder- und DämpfungsvorricMung nach Anspruch 13 oder 14,
**dadurch gekennzeichnet, dass** das Aggregat ein Klimakompressor (40) ist.

## Claims

1. Springing and dampening apparatus for springing and dampening of the swivelling motion of at least one lever (2, 3) which lever is swivellingly and springingly mounted with:
- a first lever (3) which is pivot-mounted about a pivot axis (Z),
- a torsionally stressed springing means (4) extending along the pivot-axis (Z), which springing means comprises two spring end regions (5, 6) spaced apart from one another, whereof a first (5) is torque proof connected to the first lever (3),
**characterised in that** the springing and dampening apparatus comprises
- a hollow cylinder (7), in the cylindrical internal space of which the torsionally stressed springing means (4) is housed and which hollow cylinder is torque proof connected at a cylinder end region (8) to the second spring end region (6) of the springing means (4),
- at least one dampening element (14, 15) which is torque proof arranged on the hollow cylinder (7), but moveable in direction of the pivot-axis (Z), and which is torque proof connected to the second spring end region (6) of the torsionally stressed springing means (4),
- at least one friction element (12, 13), which is in frictional contact with the dampening element (7, 14, 15) for the attenuation of a rotary motion, and
- a spring (18), which presses against the at least one dampening element (14, 15) and thus effects a predetermined friction moment between the dampening element (14, 15) and the friction element (12, 13) for the attenuation of the rotary motion.

2. Springing and dampening apparatus according to claim 1,
**characterised in that**
- two dampening elements (14, 15) are torque proof arranged on the hollow cylinder (7), but moveable in direction of the pivot-axis (Z), and
- the spring (18) is arranged between the two dampening elements (14, 15), wherein the spring (18) presses the two dampening elements (14, 15) away from one another and in each case against a friction element (12, 13) and thus effects a predetermined friction moment between, in each case, a dampening element (14, 15) and a friction element (12, 13).

3. Springing and dampening apparatus according to one of the preceding claims,
**characterised in that** the dampening elements (14, 15) in each case comprise a cone superficies surface as a friction surface, which in each case are in frictional contact with correspondingly shaped friction surfaces of the friction elements (12, 13).

4. Springing and dampening apparatus according to one of the claims 1-4,
**characterised in that** the at least one friction element (12, 13) is part of a holder (20), in which the hollow cylinder (7) is pivot-mounted.

5. Springing and dampening apparatus according to one of the preceding claims,
**characterised in that** a second lever (2) exists, which is pivot-mounted around the pivot-axis (Z) like the first lever (3).

6. Springing and dampening apparatus according to claim 5,
**characterised in that** the second lever (2) is torque proof connected to the dampening element (14, 15).

7. Springing and dampening apparatus according to claim 5 or 6,
**characterised in that** the second lever (2) is torque proof connected to the hollow cylinder (7).

8. Springing and dampening apparatus according to one or more of the preceding claims,
**characterised in that** the springing means (4) comprises one or more leaf springs (4a, 4b, 4c).

9. Springing and dampening apparatus according to one of the preceding claims,
**characterised in that** the hollow cylinder (7) which is torque proof connected to the torsionally stressed springing means (4) is pivot-mounted in a holder (12, 13, 20).

10. Springing and dampening apparatus according to one of the preceding claims,
**characterised in that** the friction elements (12, 13) are integrated in the holder (20).

11. Springing and dampening apparatus according to one of the preceding claims,
**characterised in that** one or both lever are designed as tensioning arms (2, 3) with tensioning means (22, 23) arranged thereon and the tensioning means (2, 3) are designed for the tensioning of a belt (30) in a belt drive.

12. Springing and dampening apparatus according to claim 11,
**characterised in that** the belt (30) comprises an inner surface and the springing and dampening apparatus is arranged outside of the inner surface.

13. Springing and dampening apparatus according to claim 12,
**characterised in that** the belt (30) is assigned to a traction means drive of a motor, in particular a combustion engine, which comprises the drive of a starter generator (41) and at least one further unit (40) and aggregation (40), respectively.

14. Springing and dampening apparatus according to claim 13,
**characterised in that** the belt (30) winds around a belt pulley (24) of the motor, a belt pulley (26) of the starter generator (41) and a belt pulley of the unit (40) and a tensioning means (23) can be tensioned against the strand between the belt pulley (24) of the motor and the belt pulley (26) of the starter generator (41) and a tensioning means (22) can be tensioned against the strand between the belt pulley (28) of the unit (40) and the belt pulley (26) of the starter generator (41).

15. Springing and dampening apparatus according to claim 13 or 14,
**characterised in that** the unit is a climate compressor and an air-conditioning compressor (40), respectively.

## Revendications

1. Dispositif de suspension et d'amortissement pour suspendre et amortir le mouvement pivotant d'au moins un bras de levier (2, 3) pivotant et monté sur ressort, avec
- un premier bras de levier (3), qui est monté avec liberté de pivoter autour d'un axe de rotation (Z),
- un élément élastique (4) s'étendant le long de l'axe de rotation (Z), soumis à un effort de torsion, présentant deux régions élastiques séparées l'une de l'autre (5, 6), desquelles une première région (5) est solidaire du premier bras de levier (3), **caractérisé en ce que** le dispositif de suspension et d'amortissement comprend
- un cylindre creux (7), dans la cavité interne duquel est logé l'élément élastique (4) soumis à un effort de torsion, et qui est solidaire sur une section cylindrique (8) de la deuxième région élastique (6) de l'élément élastique (4),
- au moins un élément amortisseur (14, 15), solidaire du cylindre creux (7), mais libre de se mouvoir dans le sens de l'axe de rotation (Z), est solidaire de la deuxième région élastique (6) de l'élément élastique de torsion (4),
- au moins un élément de friction (12, 13), lequel est en contact par friction avec l'élément amortisseur (7, 14, 15) afin d'amortir un mouvement de rotation, et
- un ressort (18), lequel appuie contre au moins l'élément amortisseur (14, 15), et génère ainsi un moment de friction prédéfini entre l'élément amortisseur (14, 15) et l'élément de friction (12, 13) pour amortir le mouvement de rotation.

2. Dispositif de suspension et d'amortissement selon la revendication n° 1
**caractérisé en ce que**
- deux éléments amortisseurs (14, 15), sont solidaires du cylindre creux (7), mais libres de se mouvoir dans le sens de l'axe de rotation (Z), et
- le ressort (18) est disposé entre les deux éléments amortisseurs (14, 15), de telle sorte que le ressort (18) pousse les deux éléments amortisseurs (14, 15) loin l'un de l'autre et contre chaque fois un élément de friction (12, 13), et génère ainsi un moment de friction prédéfini entre chaque élément amortisseur (14, 15) et l'élément de friction (12, 13) correspondant.

3. Dispositif de suspension et d'amortissement selon l'une des revendications précédentes **caractérisé en ce que** les éléments de friction (14, 15) présentent chacun une jupe conique servant de surface de friction, en contact par friction avec des surfaces correspondantes des éléments de friction (12, 13).

4. Dispositif de suspension et d'amortissement selon l'une des revendications n° 1 à 3, **caractérisé en ce qu'**au moins un élément de friction (12, 13) fait partie d'un support (20) dans lequel le cylindre creux (7) est disposé avec liberté de pivoter.

5. Dispositif de suspension et d'amortissement selon l'une des revendications précédentes, **caractérisé en ce qu'**un deuxième bras de levier (2) est présent, lequel est libre de pivoter autour de l'axe de rotation (Z) comme le bras de levier (3).

6. Dispositif de suspension et d'amortissement selon la revendication n° 5, **caractérisé en ce que** le deuxième bras de levier (2) est solidaire de l'élément amortisseur (14, 15).

7. Dispositif de suspension et d'amortissement selon la revendication n° 5 ou la revendication n° 6, **caractérisé en ce que** le deuxième bras de levier (2) est solidaire du cylindre creux (7).

8. Dispositif de suspension et d'amortissement selon une ou plusieurs des revendications précédentes, **caractérisé en ce que** l'élément élastique (4) est constitué d'une ou de plusieurs lames-ressort (4a, 4b, 4c).

9. Dispositif de suspension et d'amortissement selon l'une des revendications précédentes, **caractérisé en ce que** le cylindre creux (7) solidaire de l'élément élastique (4) soumis à un effort de torsion est monté dans un support (12, 13, 20) avec liberté de pivoter.

10. Dispositif de suspension et d'amortissement selon l'une des revendications précédentes, **caractérisé en ce que** les éléments de friction (12, 13) sont intégrés au support (20).

11. Dispositif de suspension et d'amortissement selon l'une des revendications précédentes, **caractérisé en ce qu'**un ou les deux bras de levier sont formés comme levier tendeur (2, 3) avec dispositif de tension (22, 23) disposé sur le levier, et les dispositifs de tension (22, 23) sont constitués pour tendre une courroie (30) dans un entraînement à courroie.

12. Dispositif de suspension et d'amortissement selon la revendication n° 11, **caractérisé en ce que** la courroie (30) entoure une surface interne et le dispositif de suspension et d'amortissement est disposé à l'extérieur de la surface interne.

13. Dispositif de suspension et d'amortissement selon la revendication n° 12, **caractérisé en ce que** la courroie (30) appartient à une transmission à courroie d'un moteur, en particulier un moteur à combustion interne, comprenant l'entraînement d'un démarreur alternateur (41) et d'au moins un groupe (40) supplémentaire.

14. Dispositif de suspension et d'amortissement selon la revendication n° 13, **caractérisé en ce que** la courroie (30) enlace une poulie (24) du moteur, une poulie (26) du démarreur-alternateur (41) et une poulie du groupe (40) et qu'un élément tendeur (23) appuie contre la section située entre la poulie (24) du moteur et la poulie (26) du démarreur-alternateur (41), et qu'un élément tendeur (22) appuie contre la section située entre la poulie (28) du groupe (40) et la poulie (26) du démarreur-alternateur (41).

15. Dispositif de suspension et d'amortissement selon la revendication n° 13 ou la revendication n°14, **caractérisé en ce que** le groupe est constitué du compresseur d'un climatiseur (40).
